# DEMANDE DE BREVET EUROPEEN

(11) **EP 4 807 930 A1**
(43) Date de publication de la demande: **16.09.2026**
(21) Numéro de dépôt: 26159814.8
(22) Date de dépôt: 20.02.2026
(51) Int. Cl.: H02J 1/10, H02J 1/14, H02J 7/34

(54) **SYSTEME DE CONVERTISSEUR ELECTRONIQUE DE PUISSANCE**

(30) Priorité: 13.03.2025 FR 2502523
(71) Demandeur: IFP Energies nouvelles, 92500 Rueil-Malmaison (FR)
(72) Inventeur: BATTISTON, Alexandre, 92852 RUEIL-MALMAISON CEDEX (FR)
(74) Mandataire: IFP Energies nouvelles

(57) **Abrégé**

Système de convertisseur électronique de puissance destiné à assurer la connexion électrique entre une pluralité de k sources S1,S2,S3,S4 de tension électrique et un bus de tension continue DC bus, qui comprend k convertisseurs de tension continu/continu DC/DC
- les k convertisseurs DC/DC sont répartis dans n modules M₁,M₂, chaque module comprenant au moins p desdits k convertisseurs DC/DC
- les p convertisseurs DC/DC de chaque module M₁,M₂ sont munis de connectiques aptes à les connecter chacun à une des p sources de tension électrique associées audit module et étant montés en parallèle dans chaque module
- les n modules M₁,M₂ sont connectés les uns aux autres en cascade
- l'étage de sortie des n modules M₁,M₂,, est un étage capacitif C₁,C₂
- le premier et le dernier des n modules M₁,M₂ sont munis de connectiques aptes à la connexion électrique desdits modules aux bornes du bus de tension continue.

## Description

### Domaine technique

L'invention concerne le domaine des convertisseurs de puissance électrique utilisés pour connecter une charge, par exemple une machine électrique ou un onduleur (qui peut lui-même être destiné à alimenter en électricité une machine électrique) à une pluralité de sources d'énergie électrique. Les sources d'énergie électrique peuvent être identiques entre elles et/ou différentes, et peuvent notamment être des moyens de stockage électrochimiques d'électricité comme des batteries ou des supercondensateurs, ou encore des moyens de production d'électricité à partir d'un carburant, par exemple de type hydrogène comme les piles à combustible.

Elle s'intéresse notamment aux véhicules équipés d'un groupe motopropulseur comprenant une machine électrique et à l'architecture électrique intégrant la machine électrique et ses sources d'alimentation en électricité. On parle alors d'architecture multi-sources.

Les véhicules peuvent être terrestres (véhicules légers, poids lourds, moyens de transport collectifs de type car...), maritimes ou aériens, sans exclure des applications statiques de machines électriques telles que des machines de charge industrielles ou des générateurs électriques.

L'invention n'est cependant pas limitée à des convertisseurs dédiés à des machines électriques, qui sont ici citées à titre d'exemple de mise en œuvre de ce type de convertisseur.

### Technique antérieure

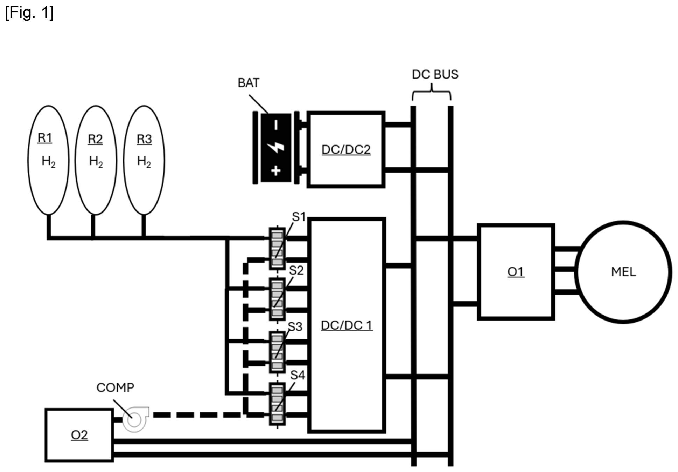

La **figure 1** représente un exemple de configuration connue d'une architecture multi-sources pour un véhicule de type véhicule poids lourd équipé d'un groupe motopropulseur. Elle comprend plusieurs piles à combustible (ou empilements de piles à combustible) et une batterie comme sources d'énergie : Sont représentées quatre empilements de piles à hydrogène S1,S2,S3,S4 (ces empilements étant parfois désignés par leur traduction anglaise « stacks » et pourront être également désignés par ce terme dans le présent texte).

Ces empilements ou « stacks » sont alimentés par trois réservoirs d'hydrogène R1,R2,R3, et ces empilements alimentent en énergie électrique un moteur électrique MEL, optionnellement via un premier convertisseur de puissance en courant continu/continu DC/DC 1, ou directement via un bus DC à un onduleur O1 lui-même connecté au moteur électrique MEL. Il est également prévu un compresseur d'air qui alimente en air les piles à combustibles des empilements, et un onduleur O2 qui pilote le compresseur en régime. Les quatre empilements de piles à combustible S1,S2,S3,S4 produisent une partie de la charge de puissance totale nécessaire et de la tension nécessaire aux bornes du bus DC, et constituent ensemble, ici, la source d'énergie principale pour la machine électrique MEL. On prévoit aussi au moins, généralement, une batterie BAT haute tension qui peut ajouter sa contribution en électricité à celle fournie par les piles à combustible, notamment pendant les états transitoires, les demandes de faible charge et pendant les phases de freinage régénératif (pendant lesquelles la batterie va permettre un stockage de l'électricité), en étant également connectée à l'onduleur O1 par le bus DC, directement ou via un second convertisseur optionnel de puissance en courant continu/continu DC/DC2.

Selon les applications, on peut prévoir non pas une mais plusieurs batteries à connecter : on a alors une architecture avec à la fois plusieurs stacks de piles à combustible et plusieurs batteries (ou supercondensateurs), ce qui peut être pertinent pour des applications de très forte puissance comme les applications marines notamment.

On voit de cet exemple d'architecture qu'elle nécessite l'association de plusieurs sources (empilements ou stacks de piles à combustible ici), association qu'on désigne parfois sous le terme de « multi-stacks » ou « multi-sources » de façon plus générale.

Dans les applications où le besoin en énergie de la machine électrique est élevé (véhicule poids lourd par exemple), on prévoit généralement de connecter les sources d'électricité au bus DC via un convertisseur de puissance DC/DC, pour répondre au besoin de puissance et de tension, les convertisseurs de puissance permettant de contrôler les flux de puissance entre les piles à combustible ou empilements de piles à combustible et le bus DC.

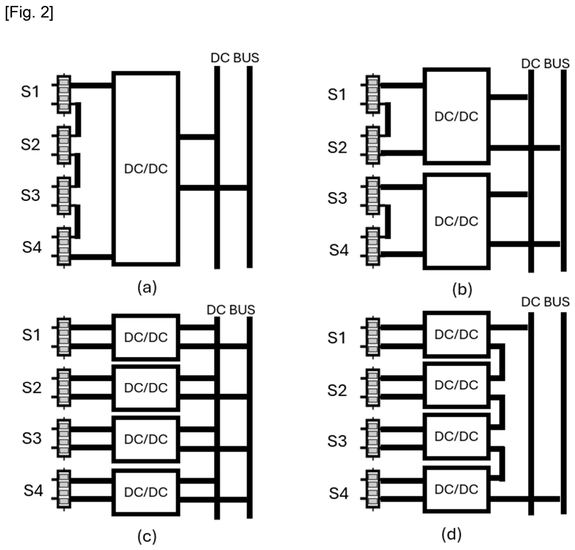

La **figure 2** représente différentes configurations connues, où une pluralité de sources électriques S1,S2,S3,S4 (à titre d'exemple quatre stacks de piles à combustible comme à la figure 1) sont connectées au DC bus via un ou des convertisseurs de puissance continu/continu DC/DC selon différents montages électriques :
- dans le cas (a), les piles à combustible S1,S2,S3,S4 sont montées en série, avec un seul convertisseur DC/DC connecté en entrée à l'une des bornes de la première des piles S1 et l'autre borne de la dernière pile S4 au DC et en sortie au DC bus
- dans le cas (c), les piles à combustible S1,S2,S3,S4 sont montées en parallèle, avec un convertisseur DC/DC par pile à combustible, connecté chacun en entrée à une des piles et en sortie au DC bus
- dans le cas (b), on associe les quatre piles à combustible avec deux convertisseurs DC/DC par un montage de type série (pour les piles) /parallèle (pour les convertisseurs)
- enfin, dans le cas (d), on a comme dans le cas (c) quatre piles pour quatre convertisseurs DC/DC avec un montage dit en cascade, avec un montage en parallèle des piles et en série des convertisseurs.

On pourra retrouver plus en détails la description de ces différentes configurations dans la littérature scientifique, notamment dans la publication de A.Gaillard et al., "A review on DC/DC converter architectures for power fuel cell applications," Energy Conversion and Management, vol. 105, no., pp. 716-730, 2015, ou encore dans la publication de L. Boulon et al. "A review of multi-stack and modular fuel cell systems: Interests, application areas and on-going research activities," International Journal of Hydrogen Energy, vol. 39, no. 23, pp. 12101-12111, 2014.

Chacune de ces quatre configurations peut présenter des avantages et des inconvénients, notamment selon que l'on privilégie le volume/ le nombre des convertisseurs de puissance DC/DC à utiliser, le stress sur les composants de puissance et leur fiabilité, la possibilité ou non de fonctionner en mode dégradé, les degrés de liberté sur le pilotage des piles, ou encore le rendement.

Par exemple, la configuration de montage en série (a) est celle qui offre le meilleur rendement, mais elle ne permet pas le contrôle de chacune des piles, ce qui limite les fonctionnements en mode dégradé, ainsi que la modularité de la solution. A l'inverse, la configuration de montage en parallèle (c) est celle qui offre la plus grande durabilité, car les piles peuvent être pilotées individuellement, avec une forte capacité de modularité et de fonctionnement en mode dégradé. Cependant, cette configuration n'a pas le rendement le plus élevé. Les configurations (b) « série-parallèle » et (d) en « cascade » présentent un compromis intéressant, mais présentent une durabilité peu élevée pour la première (pilotage d'un groupe de piles et non de piles individuelles), et d'une capacité peu élevée à reconfigurer l'architecture en cas de défaut pour la deuxième (la configuration cascade (d) est en effet une mise en série des DC/DC qui contraint le système à fonctionner en mode sain (on comprend par « sain », de façon connue, un mode nominal, sans défaut).

L'invention a alors pour but la mise au point d'une nouvelle architecture électrique permettant de connecter une multiplicité de sources d'énergie électrique à un bus continu DC/DC, notamment mais pas exclusivement pour alimenter en électricité une machine électrique. L'invention cherche à mettre au point une architecture électrique améliorée, qui puisse notamment cumuler différents avantages, et notamment présenter à la fois une certaine modularité, des degrés de liberté dans le pilotage des sources d'énergie électrique, tout en conservant un rendement élevé.

### Résumé de l'invention

L'invention a tout d'abord pour objet un système de convertisseur électronique de puissance destiné à assurer la connexion électrique entre, d'une part, une pluralité de k sources S de tension électrique, k étant au moins égal à 4, et d'autre part un bus de tension continue DC bus,
tel que
ledit système comprend k convertisseurs de tension continu/continu DC/DC,
et tel que
   - les k convertisseurs DC/DC sont répartis dans n modules M₁,M₂,M₃, ..., Mₙ, chaque module comprenant au moins p desdits k convertisseurs DC/DC, p étant au moins égal à 2
   - les p convertisseurs DC/DC de chaque module sont munis de connectiques aptes à les connecter chacun à une des p sources S de tension électrique associées audit module et étant montés en parallèle dans chaque module,
   - les n modules sont connectés les uns aux autres par un montage en cascade
   - l'étage de sortie de chacun des n modules M₁,M₂,M₃, ..., Mₙ, est un étage capacitif C₁,C₂,C₃, ..., Cₙ
   - le premier et le dernier des n modules M₁,M₂,M₃, ..., Mₙ, montés en cascade sont munis de connectiques aptes à la connexion électrique de l'ensemble des modules aux bornes du bus de tension continue DC bus.

De préférence, ladite tension continue DC est supérieure à la tension individuelle de chaque k source. C'est une configuration connue sous le terme anglais de « boost ».

L'invention propose ainsi une configuration de type « parallèle-cascade », qui est modulaire, où les modules sont montés en cascade, alors que les convertisseurs de chaque module sont, eux, montés en parallèle (par rapport aux sources d'énergie électrique de type stacks de pile à combustible). Ce type de montage permet de cumuler différents avantages :
- sa modularité est un grand atout, puisqu'on peut regrouper les convertisseurs en modules, en adaptant de façon flexible à la fois le nombre de modules et le nombre de convertisseurs de chaque module en fonction des besoins (notamment en courant et/ou tension), en fonction des applications visées et du nombre de sources électriques Par exemple, si toutes les sources électriques ont la même puissance électrique, on peut adopter des modules comprenant le même nombre de convertisseurs chacun. Mais si on prévoit les sources électriques présentant des puissances électriques différentes, il peut alors être pertinent de prévoir des modules avec un nombre de convertisseurs différent d'un module à l'autre selon qu'ils sont connectés à telle ou telle source électrique.
- il offre des degrés de liberté pour piloter les sources électriques , comme le ferait un montage connu en parallèle : cf figure 2 (c)
- il offre en outre un rendement élevé, et un stress sur les composants limité, à l'image de la configuration connue en série : cf figure 2 (a).

De préférence, l'étage capacitif C₁,C₂,C₃, ..., Cₙ en sortie de chaque module M₁,M₂, ..., Mₙ comporte un ou une pluralité de condensateur(s).

Dans le cadre de l'invention le terme « étage capacitif » correspond à l'étage de sortie de chacun des modules. Donc, comme on connecte les modules en cascade selon l'invention, cela signifie que les condensateurs de sortie sont également connectés en cascade.

De préférence, les nombres de module n et de convertisseurs p par module sont tels que
n ≥ 2,de préférence n étant compris entre 2 et 10
p≥ 2, de préférence p étant compris entre 2 et 5.

Dans le présent texte , les sources de tension électrique peuvent être choisies parmi des moyens de production d'électricité à partir d'un carburant, par exemple de type hydrogène comme les piles à combustible, rassemblées ou non dans les empilements ou encore des batteries ou des supercondensateurs.

L'invention a également pour objet un système de transfert d'énergie électrique comprenant
- une pluralité de k sources S de tension électrique, k étant au moins égal à 4,
- un bus de tension continue DC bus,
- et le système de convertisseur électronique de puissance destiné à assurer la connexion électrique entre ladite pluralité de k sources S de tension électrique et ledit bus de tension continue DC bus décrit plus haut,
   tel que
- le bus de tension continue DC bus est également connecté à la source de tension sous forme d'au moins un dispositif de stockage d'énergie électrique, soit directement, soit indirectement, notamment via au moins un convertisseur de tension continu/continu DC/DC, la tension aux bornes du bus de tension continue DC bus étant régulée ou imposée par ledit dispositif de stockage d'énergie électrique,
- dans n - 1 modules parmi les n modules M₁,M₂,M₃, ..., Mₙ, un des p convertisseurs DC/DC est déclaré VR ( pour « Voltage-Regulated » en anglais) pour réguler la tension dans l'étage capacitif C₁,C₂,C₃, ..., Cₙ associé à chacun desdits n - 1 modules, les autres convertisseurs (DC/DC) des n - 1 modules et ceux du nième module étant déclarés CR (pour « Current-Regulated » en anglais) pour réguler le courant des sources S1, S2, ..., Sk auxquelles ils se rattachent.

La tension continue DC est de préférence supérieure à la tension individuelle de chaque k source.

A noter qu'en variante de la régulation en tension dite VR , on peut utiliser une régulation en énergie y des condensateurs C, énergie qui est liée la tension V par la relation y = ½ CV².

A noter qu'en variante de la régulation en intensité dite CR , on peut utiliser une régulation en puissance P à l'entrée des convertisseurs DC/DC, puissance qui est liée au courant I et à tension V en sortie des empilements par la relation P = V x I

L'invention a également pour objet un système de transfert d'énergie électrique comprenant
- une pluralité de k sources S de tension électrique, k étant au moins égal à 4,
- un bus de tension continue DC bus,
- et le système de convertisseur électronique de puissance destiné à assurer la connexion électrique entre ladite pluralité de k sources S de tension électrique et ledit bus de tension continue DC bus décrit plus haut,
   tel que
- dans chacun des n modules(M₁,M₂,M₃, ..., n_{N} un des p convertisseurs DC/DC est déclaré régulé en tension VR (« Voltage-Regulated » en anglais) pour réguler la tension dans l'étage capacitif C₁,C₂,C₃, ..., Cₙ associé à chacun desdits n modules, les autres convertisseurs DC/DC des n modules étant déclarés régulés en courant CR (« Current-Regulated » en anglais ) pour réguler le courant des sources S1, S2, ..., Sk auxquelles ils se rattachent.

La tension continue DC est de préférence supérieure à la tension individuelle de chaque k source.

Avantageusement, le système de transfert d'énergie électrique selon l'invention peut aussi comprendre (au moins) une source de tension différente des k sources de tension électrique sous forme d'au moins un dispositif de stockage d'énergie électrique, notamment de type électrochimique, de préférence une batterie ou un supercondensateur. Dans ce cas, le bus de tension continue DC bus peut également être connecté à la source de tension sous forme d'au moins un dispositif de stockage d'énergie électrique
- soit directement,
- soit indirectement, notamment via au moins un convertisseur de tension continu/continu DC/DC, la tension aux bornes du bus de tension continue DC bus étant régulée ou imposée par ledit dispositif de stockage d'énergie électrique.

L'invention a également pour objet un système de transfert d'énergie électrique comprenant
- une pluralité de k sources S de tension électrique, k étant au moins égal à 4,
- un bus de tension continue DC bus,
- et le système de convertisseur électronique de puissance destiné à assurer la connexion électrique entre ladite pluralité de k sources S de tension électrique et ledit bus de tension continue DC bus décrit plus haut,
tel que les k sources sont des piles à combustible ou des empilements (ou « stacks » en anglais) de piles à combustible, éventuellement regroupées en des empilements de piles à combustible, notamment des piles à hydrogène en connexion fluidique avec un ou des réservoirs d'hydrogène.

L'invention a également pour objet une machine électrique MEL alimentée électriquement par un système de convertisseur électronique de puissance ou par un système de transfert d'énergie électrique tels que décrits plus haut, ainsi que tout groupe motopropulseur comprenant ladite machine électrique ainsi alimentée.

L'invention a également pour objet un véhicule comprenant un groupe motopropulseur tel que décrit plus haut.

L'invention a également pour objet un ensemble comprenant un groupe motopropulseur comportant une machine électrique et un système de convertisseur électronique de puissance ou par un système de transfert d'énergie électrique tels que décrits plus haut, ladite machine électrique étant alimentée électriquement par ledit système de convertisseur électronique ou par ledit système de transfert d'énergie électrique .

L'invention a également pour objet une machine de charge industrielle ou un générateur électrique alimentés électriquement par un système de convertisseur électronique de puissance ou par un système de transfert d'énergie électrique tels que décrits plus haut.

L'invention a également pour objet un ensemble comprenant une machine de charge industrielle ou un générateur électrique et un système de convertisseur électronique de puissance ou un système de transfert d'énergie électrique tels que décrits plus haut, ladite machine ou ledit générateur étant alimentés électriquement par ledit système de convertisseur électronique de puissance ou par ledit système de transfert d'énergie électrique.

### Liste des figures

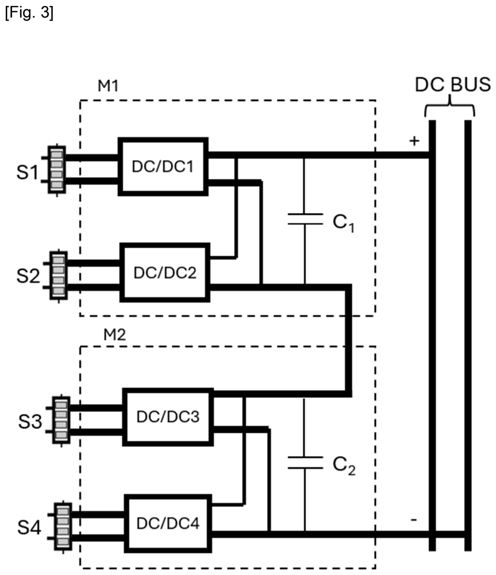

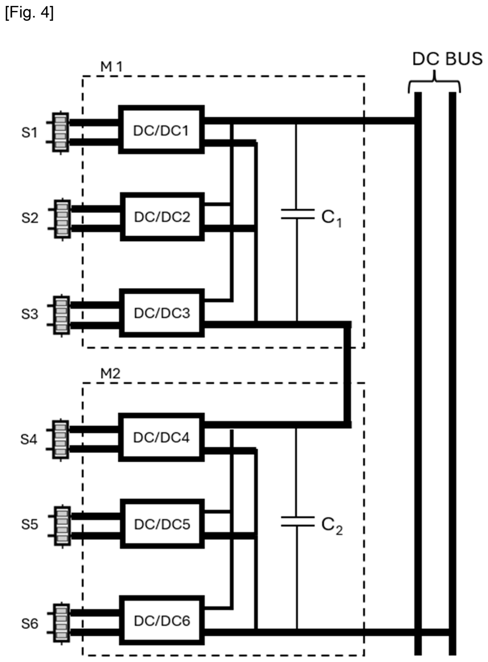

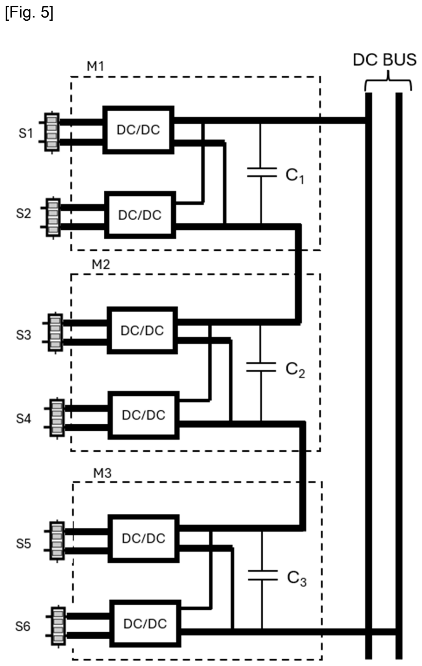

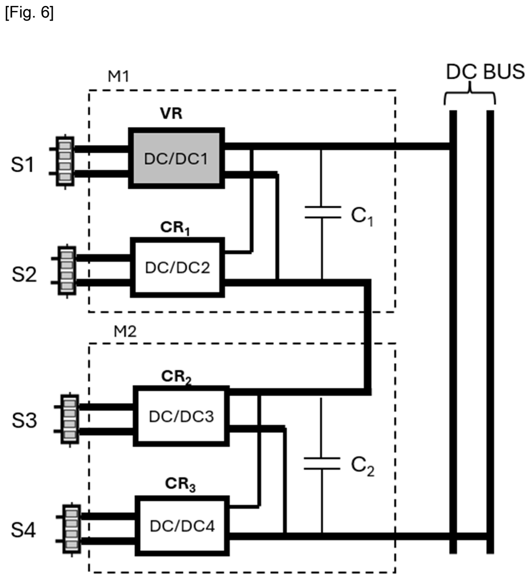

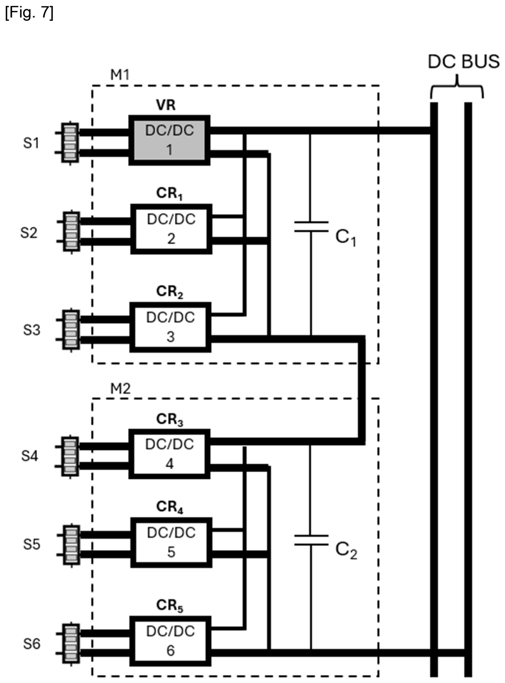

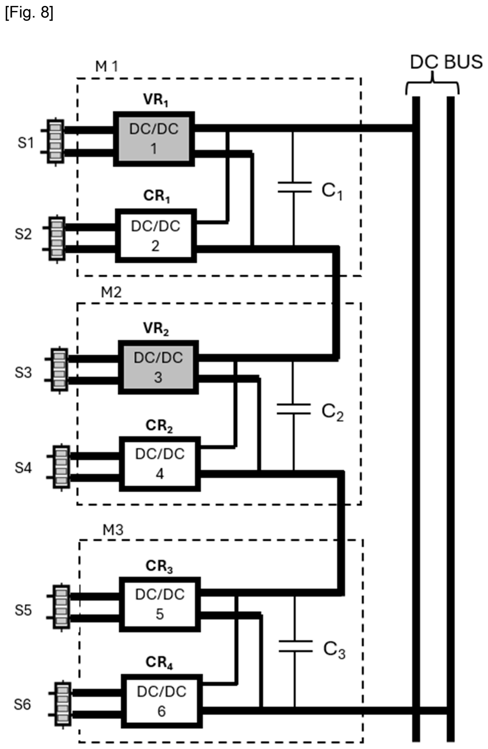

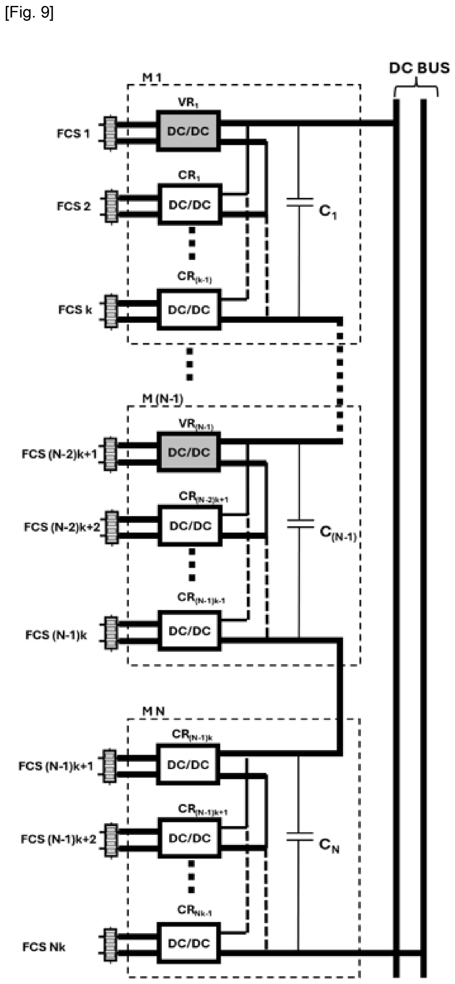

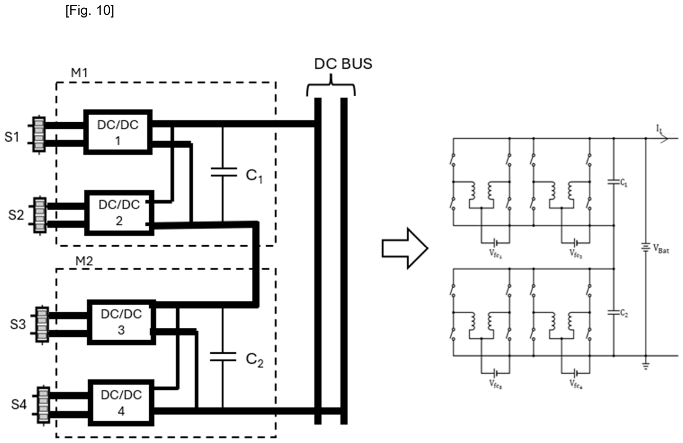

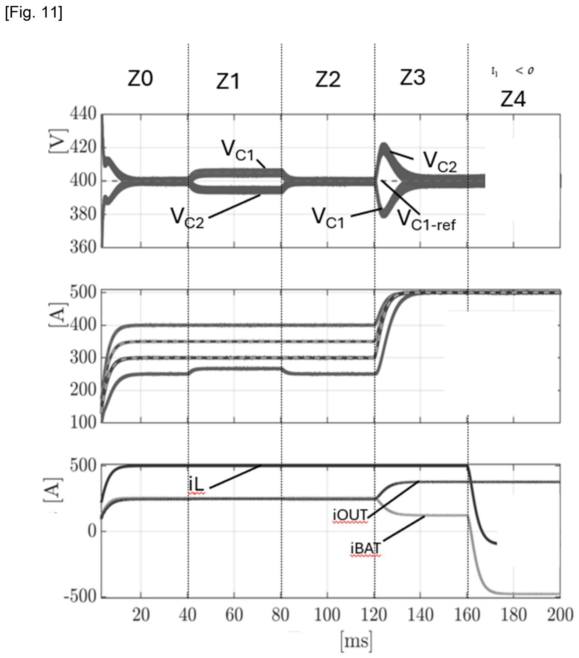

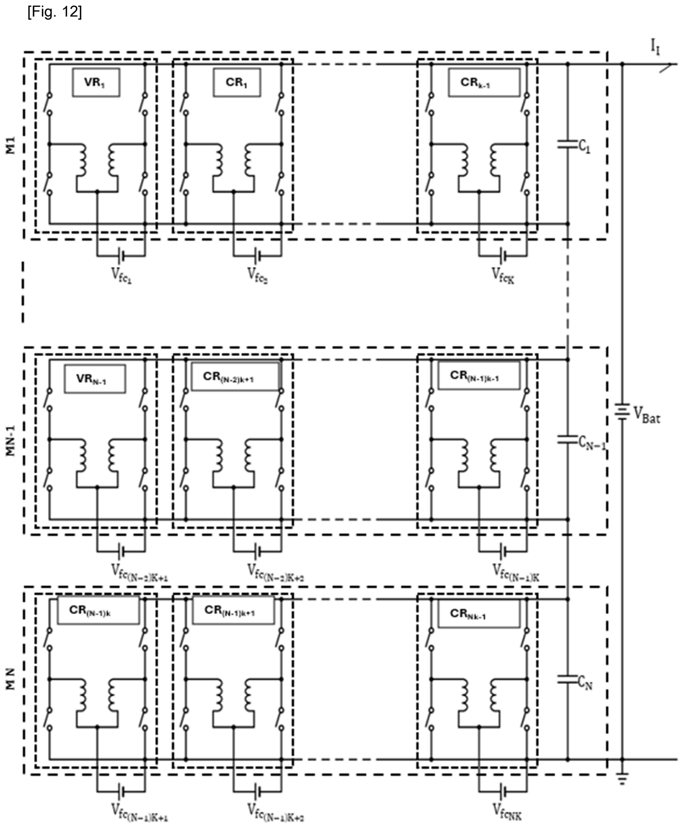

**La** **figure 1** représente un schéma d'une configuration d'une alimentation électrique d'une machine électrique par des empilements ou stacks de piles à combustible et par une batterie, elle a été décrite plus haut.
**La** **figure 2** représente quatre configurations connues de montage électrique possible pour connecter des empilements de piles à combustible à un bus bar en tension continue par des convertisseurs de puissance en tension continue/continue, elle a été décrite plus haut.
**La** **figure 3** représente un premier mode de réalisation de l'invention, avec un assemblage des 4 convertisseurs de puissance en tension continue/continue associés à 4 empilements de piles à combustible, en 2 modules comprenant chacun 2 convertisseurs.
**La** **figure 4** représente un deuxième mode de réalisation de l'invention, avec un assemblage des 6 convertisseurs de puissance en tension continue/continue associés à 6 empilements de piles à combustible, en 2 modules comprenant chacun 3 convertisseurs.
**La** **figure 5** représente un troisième mode de réalisation de l'invention, avec un regroupement des 6 convertisseurs de puissance en tension continue/continue associés à 6 empilements de piles à combustible, en 3 modules comprenant chacun 2 convertisseurs.
**La** **figure 6** représente un mode de pilotage du premier mode de réalisation de l'invention représenté à la figure 3.
**La** **figure 7** représente un mode de pilotage du deuxième mode de réalisation de l'invention représenté à la figure 4.
**La** **figure 8** représente un mode de pilotage du troisième mode de réalisation de l'invention représenté à la figure 5.
**La** **figure 9** représente une généralisation des modes de pilotage représentés aux figures 6 à 8, dans le cas de n modules regroupant k convertisseurs de puissance en tension continue/continue associés à k empilements de piles à combustible.
**La** **figure 10** représente une topologie associée au montage selon le premier mode de réalisation de l'invention selon la figure 4.
**La** **figure 11** représente trois graphes représentant les tensions (en volt) aux bornes des étages capacitifs utilisés en sortie des modules, ainsi que les courants régulés des stacks de pile à combustibles en fonction du temps (en ms) et pour un profile de courant de charge donné. Ce sont des résultats de simulation obtenus avec le premier mode de réalisation de l'invention selon la figure 4.
**La** **figure 12** est généralisation de l'exemple représenté à la figure 10, selon l'approche de la figure 9, avec une architecture avec n modules Mₙ et k convertisseurs DC/DC.

Les figures 1 à 12 sont volontairement très schématiques pour plus de clarté, et ne représentent que les composants les plus utiles à la compréhension de l'invention, l'échelle n'étant pas respectée.

Elles ne représentent que des exemples non limitatifs de mise en œuvre de l'invention

### Description des modes de réalisation

L'invention est décrite plus en détails ci-après, notamment à l'aide de différents modes de réalisation illustrés aux figures. On illustre l'invention avec des sources d'énergie électrique sous forme d'empilements de piles à combustible, mais l'invention peut tout aussi bien s'appliquer à d'autres sources d'énergie, comme évoqué au préambule du présent texte.

L'invention concerne une nouvelle configuration pour associer des convertisseurs d'électronique de puissance de type DC/DC (désignés par la suite convertisseurs DC/DC pour des applications visant à interconnecter :
- plusieurs sources de tension (par exemple des empilements de pile à combustible, parfois désignés sous le terme anglais de « stacks » )
- à un bus de tension continue DC, dit DC bus.

Comme on le verra plus loin, la tension du bus à tension continue peut être régulée (par exemple par connexion à une batterie au travers d'un convertisseur DC/DC) ou être flottante (par exemple par connexion directe à une batterie).

La configuration selon l'invention peut être désignée sous l'expression « parallèle-cascade » dans la mesure où elle permet de connecter un groupe de k sources de tension (qui sont par exemple des empilements de piles à combustible) au travers de k convertisseurs DC/DC qu'on peut appeler des sous-modules et qui sont connectés en parallèle. Les sous-modules sont regroupés en n modules. Et ces n modules ont une sortie représentant un étage capacitif et sont associés en cascade pour être connectés à un bus bar.

Un premier mode de réalisation de l'invention représenté à la figure 3 comprend une architecture électrique visant à connecter des empilements de piles à combustible à un DC Bus. Elle comprend :
- 4 empilements de piles à combustible, qui sont donc les 4 sources d'énergie électrique S1,S2,S3,S4
- 4 convertisseurs de puissance DC/DC : DC/DC1, DC/DC2, DC/DC3, DC/DC4, chaque convertisseur de puissance DC/DC étant connecté à un empilement de piles à combustibles,
- 2 condensateurs C1,C2

Les convertisseurs de puissance DC/DC sont regroupés en deux modules M1,M2 comprenant chacun deux convertisseurs DC/DC1, DC/DC2 d'une part, et DC/DC3, DC/DC4 d'autre part.

La sortie de chacun des modules M1,M2 représente un étage capacitif, constitué ici d'un condensateur C1 pour le module M1 et un condensateur C2 pour le module M2.

Dans un même module, les convertisseurs sont montés en parallèle : les sorties des convertisseurs DC/DC sont connectées entre elle au sein d'un même module.

Les modules sont eux, en sortie, montés en cascade via leurs étages capacitifs C1,C2 : la sortie du premier convertisseur DC/DC1 du premier module M1 est la borne + (par exemple) de l'ensemble des modules, qui se connecte à la borne + du DC bus, et la sortie du dernier convertisseur DC/DC4 du deuxième module M2 est la borne - de l'ensemble des modules qui se connecte à la borne - du DC bus. La deuxième sortie du premier module M1 est connectée à la première sortie du deuxième module M2.

Aux bornes du DC bus, on a une tension U qui est la somme de la tension générée avec le module M1 et de celle générée avec le module M2.

La **figure 4** représente un deuxième mode de réalisation de l'invention, avec une architecture électrique visant à connecter des empilements de piles à combustible à un DC Bus. Elle comprend cette fois:
- 6 empilements de piles à combustible, qui sont donc les 6 sources d'énergie électrique S1,S2,S3,S4,S5,S6, chaque convertisseur de puissance DC/DC étant connecté à un empilement de piles à combustibles,
- 6 convertisseurs de puissance DC/DC : DC/DC1, DC/DC2, DC/DC3, DC/DC4, DC/DC5 DC/DC6
- 2 condensateurs C1,C2.

Le montage et le mode de fonctionnement est analogue à l'architecture de la figure 3, mais cette fois avec 6 empilements de piles à combustible et non pas 4 : ici, on a 2 modules M1,M2 , chacun regroupant trois convertisseurs, avec en sortie de chaque module un étage capacitif avec des condensateurs C1,C2, avec les convertisseurs montés en parallèle et les modules montés en cascade.

Ici aussi, la tension aux bornes du DC bus est la somme de la tension en sortie générée avec le module M1 et celle générée avec le module M2.

Ce mode de réalisation permet, par rapport au montage de la figure 3, d'augmenter la puissance du convertisseur total en augmentant sa capacité en courant maximal.

Une architecture alternative à celle de la figure 4, avec 6 empilements de piles à combustible et 6 convertisseurs également, est représentée à la **figure 5****,** avec un regroupement différent des convertisseurs. Ici, on a trois modules M1,M2,M3, avec, dans chaque module, 2 convertisseurs, et, en sortie de chacun des trois modules, un étage capacitif, donc ici trois condensateurs C1,C2,C3, avec toujours les convertisseurs montés en parallèle dans chaque module, et les modules montés en cascade.

Ici, la tension aux bornes du DC bus est la somme de la tension en sortie générée avec le module M1, de celle générée avec le module M2 et de celle générée avec le module M3. Ce mode de réalisation permet, par exemple, de limiter les contraintes en tension sur les convertisseurs DC/DC en découpant la tension du DC bus en plusieurs niveaux, ici trois niveaux.

On comprend que l'invention peut donc proposer toute configuration possible, en choisissant selon les besoins, et notamment selon le nombre des sources électriques, le nombre de convertisseurs nécessaires, puis en choisissant leur répartition dans un certain nombre de modules. On peut avoir ainsi 10 sources de type empilement de piles électriques connectées à 10 convertisseurs, qu'on peut répartir en 5 modules de 2 convertisseurs ou en 2 modules de 5 convertisseurs . On peut avoir le même nombre de convertisseurs dans chaque module ou un nombre de convertisseurs différent.

L'invention s'est également intéressée au pilotage de ces architectures, en distinguant deux cas de figure :

### Pilotage selon un première mise en œuvre A

C'est le cas de figure où le DC bus est une source de tension (pour la machine électrique qu'il va alimenter) provenant d'une source externe en connexion directe (quand la source de tension est connectée aux bornes du DC BUS ), par exemple une batterie, ou en connexion indirecte (la source de tension est connectée aux bornes du DC BUS au moyen d'un convertisseur de type DC/DC, qui régule la tension du bus DC).

Dans ce cas, la tension du bus DC est régulée ou imposée, et l'architecture « parallèle-cascade selon l'invention, avec n modules M1,M2... Mn, ne régule que n-1 tensions aux bornes des condensateurs C₁, C₂, ..., Cₙ₋₁.

La tension aux bornes du condensateur Cₙ est la différence entre la tension du DC BUS et la somme des tensions aux bornes des condensateurs C₁, C₂, ..., Cₙ₋₁. ${V}_{{C}_{N}} = {V}_{DCBUS} - \left({V}_{{C}_{1}}+{V}_{{C}_{2}}+⋯+{V}_{{C}_{N - 1}}\right)$

Dans chaque module M, les k convertisseurs DC/DC sont connectés en parallèle à un condensateur C.

Il convient alors de sélectionner, dans les n-1 module Mₙ₋₁, un convertisseur DC/DC qui régule la tension capacitive (ou énergie capacitive) de sortie, et l'on peut désigner comme le convertisseur DC/DC « VR » ou encore « Voltage-Regulated » en anglais ou encore désigné sous le terme de convertisseur « Primaire ».

Les autres k -1 convertisseurs DC/DC d'un même module Mₙ peuvent alors être désignés comme des convertisseurs « CR » » ou encore « Current-Regulated » en anglais ou encore désignés sous le terme de convertisseurs « Secondaires » : ils régulent essentiellement le courant (ou la puissance) de la source de tension (par exemple un stack de piles à combustible) à laquelle ils sont connectés.

A noter que lorsqu'un convertisseur DC/DC est déclaré « VR », il régule la tension (ou énergie) capacitive en sortie, au moyen de deux boucles de régulation : une boucle de courant (ou puissance) de la source d'entrée, et une boucle de tension (ou énergie), la boucle de tension générant la référence de courant de la seconde boucle, la boucle d'énergie générant la référence de puissance de la seconde boucle respectivement.

La Erreur ! Source du renvoi introuvable. illustre un exemple de pilotage selon le cas de figure A expliqué plus haut, dans une configuration à deux modules M1,M2, n=2 donc, et quatre convertisseurs DC/DC (k=4), répartis en deux convertisseurs par module : c'est la configuration de la figure 3.

Ainsi, en considérant la tension du DC bus régulée ou imposée par une source de tension externe, le premier module M1 est sélectionné pour réguler la tension du condensateur C₁, *V*_{*C*₁}, en déclarant le premier convertisseur DC/DC1 comme « VR » (régulation de la tension V_{C1}), et le second DC/DC2 comme « CR » (régulation du courant de l'empilement de piles S2).

La tension V_{C2} étant déduite de la différence V_{C2}=V_{DCBUS} - V_{C1}, les deux convertisseurs DC/DC3 et DC/DC4 du second module M2 sont également déclarés « CR » (régulation des courants de la source S3 et du courant de la source S4).

En résumé pour le cas n=2 (2 modules) et k= 2 (2 convertisseurs par module), le mode de pilotage est sélectionné comme suit :
- un DC/DC « VR », pour assurer la régulation de la tension de sortie V_{C1}
- trois DC/DC « CR », pour assurer la régulation du courant des empilements de piles S2,S3 et S4 I_{S2}, I_{S3}, I_{S4}
- La tension du deuxième condensateur C2 reste flottante (V_{C2} = V_{BUSDC} - V_{C1})

Il est à noter, pour ce mode de réalisation de l'invention comme pour tous les autres, que tous les convertisseurs DC/DC peuvent être déclarés VR ou CR, il n'y a pas d'ordre établi parmi les convertisseurs d'un module donné.

La figure 7 illustre un exemple de pilotage selon le cas de figure A expliqué plus haut, dans une configuration à deux modules M1,M2 (n=2), et trois convertisseurs par module DC/DC (k=3):.

Sur le même, principe que pour la figure 6, la Erreur ! Source du renvoi introuvable. présente la sélection du mode de pilotage « CR » ou « VR » des 6 convertisseurs DC/DC pour une configuration parallèle-cascade » avec n=2 modules et k=3 convertisseurs DC/DC par module: c'est la configuration de la figure 4.

Pour ce cas, le mode de pilotage est sélectionné comme suit :
- un convertisseur DC/DC1 est déclaré « VR » (indiqué en grisé à la figure) dans le premier module M1, assurant ainsi la régulation de la tension de sortie V_{C1}
- les cinq autres convertisseurs DC/DC2,3,4,5,6 sont déclarés « CR », en assurant la régulation du courant des empilements de piles à combustible S2, S3, S4, S5 et S6 I_{S2}, I_{S3}, I_{S4}, I_{S5}, I_{S6}
- la tension du deuxième condensateur C2 reste flottante (V_{C2} = V_{BUSDC} - V_{C1})

**La** **figure 8** illustre un exemple de pilotage selon le cas de figure A expliqué plus haut, dans une configuration à trois modules M1,M2,M3 (n=3), trois étages capacitifs C1,C2,C3, et deux convertisseurs par module DC/DC (k=2) : c'est la configuration de la figure 5.

Dans ce cas, il est nécessaire de réguler la tension de (n=3) - (1) = 2 condensateurs, par exemple C1 et C2, en déclarant « VR» le convertisseur DC/DC1 dans le module M1 et le convertisseur DC/DC3 dans le module M2 (« VR1 » » et « VR2 » indiqués en grisé à la figure).

Tous les autres convertisseurs DC/DC 2,4,5 et à 6 sont déclarés « CR ».

La tension du condensateur C3 est obtenue par différence entre la tension aux bornes du DC bus et la somme des tension V_{C1} et V_{C2}. (V_{C3} = V_{DCBUS} - (V_{C1} + V_{C2})).

En résumé pour le cas n=3 modules, et k= 2 convertisseurs DC/DC par module, le mode de pilotage est sélectionné comme suit :
- deux convertisseurs DC/DC « VR » assurent la régulation des tensions de sortie V_{C1} et V_{C2}
- quatre convertisseurs DC/DC sont déclarés « CR » et assurent la régulation du courant des empilements de piles à combustibles S2, S4, S5, S6 I_{S2}, I_{S4}, I_{S5}, I_{S6}
- La tension du troisième condensateur C3 reste flottante (V_{C3} = V_{BUSDC} - (V_{C1}+V_{C2}))

La **figure 9** représente une généralisation des modes de pilotage représentés aux figures 6 à 8, dans le cas de n modules regroupant k convertisseurs de puissance en tension continue/continue associés à k empilements de piles à combustible. Dans ce cas, le DC bus est alimenté par la batterie BAT qui impose la tension. Dans chaque module jusqu'au n-1 ^{ième}, un des convertisseur DC/DC est déclaré VR (grisé à la figure), et dans le n^{ième} module, tous les convertisseurs DC/DC sont déclarés CR.

### Pilotage selon une deuxième mise en œuvre B

C'est le cas où aucune autre source de tension n'est connectée au DC bus à part les sources électriques S, par exemple des empilements de piles à combustibles. On parle alors de DC bus flottant.

Dans ce cas, un convertisseur DC/DC « VR » doit être déclaré dans chacun des modules Mn, de sorte que la tension du DC bus totale (soit la somme des tensions capacitives V_{C1} à V_{CN} dans le cas général) est régulée par l'architecture parallèle-cascade de l'invention.

Les convertisseurs DC/DC restants sont tous déclarés « CR » pour réguler le courant des empilements de piles à combustible Sn.

En résumé, le mode de pilotage est sélectionné comme suit :
- n convertisseurs DC/DC déclarés « VR » assurent la régulation des tensions de sortie V_{C1} à VCN-1
- (k-1)n convertisseurs DC/DC déclarés « CR » assurent la régulation du courant des empilements de piles à combustible dont les convertisseurs DC/DC ne sont pas déclarés en « VR »
- Les tensions V_{C1} à V_{CN} sont toutes régulées, leur somme vaut la tension aux bornes du DC bus définie par l'application visée.

### Exemples

### Exemple 1

Cet exemple est représenté à La **figure 10** **,** avec une configuration « parallèle-cascade » de plusieurs sources de tension pour l'alimentation d'un DC bus régulé ou non, avec deux modules comprenant chacun 2 convertisseurs DC/DC, avec une représentation de la topologie des convertisseurs DC/DC.

La configuration est fonctionnelle quelle que soit la topologie électronique de puissance du convertisseur, DC/DC, isolée ou non. La topologie de convertisseur DC/DC représentée en **Erreur ! Source du renvoi introuvable.** est de type « boost entrelacé » à deux phases (« boost « en anglais se comprend comme un hacheur élévateur en français). Dans ce mode de réalisation, il est convenu que la source de tension du bus DC est supérieure aux tensions individuelles des k sources.

Dans le cas de la **Erreur ! Source du renvoi introuvable.,** avec la topologie sélectionnée, il est possible de montrer l'apport de l'architecture « parallèle-cascade » selon l'invention en termes de modularité et de degré de liberté lié au contrôle :
Les résultats de la Erreur ! Source du renvoi introuvable. montrent la régulation de la tension V_{C1} et des courants C des empilements de piles à combustible S2 (ifc2), S3 (ifc3), et S4 (ifc4), dans différentes situations, qui démontrent qu'on obtient plus de flexibilité, plus de degrés de liberté, avec l'architecture selon l'invention:
- zone Z0 : Tensions équilibrées, puissances déséquilibrées, ce qui permet de sélectionner quelle source de tension peut être plus ou moins sollicitée en fonction de ses capacités en courant et puissance. Cela est notamment intéressant si les sources sont différentes ou pour éviter/limiter le vieillissement prématuré d'une source par rapport aux autres.
- zone Z1 : Tensions déséquilibrées, puissances déséquilibrées, il est possible de déséquilibrer les tensions de sortie des n étages capacitifs de sortie des convertisseurs DC/DC, ce qui est intéressant pour limiter le stress sur les composants des convertisseurs DC/DC qui seraient limités en tension, ou éviter/limiter un vieillissement prématuré des composants de puissance.
- zone Z2 : Tensions équilibrées, et puissances déséquilibrées
- zone Z3 : Tensions et puissances équilibrées. Il s'agit ici du cas où tous les éléments du système sont identiques (sources et convertisseurs DC/DC), ce qui permet de solliciter de manière équilibrée tous les composants pour partager de manière équitable les stress en tension et courant.
- zone Z4 : Mode de récupération d'énergie. On assure dans ce test la possibilité de récupération d'énergie par l'organe de stockage connecté au DC bus.

Ces résultats sont présentés avec un DC bus raccordé à une batterie (non représentée) qui fournit un courant.

Les graphes de la figure 11 permettent d'illustrer les degrés de libertés possibles avec l'architecture proposée selon l'invention.

Le graphe en partie supérieure de la figure 11 Il représente la régulation de la tension Vc1 pour différents scenarii, et pour un courant de charge i_{L} donné selon les 4 zones Z0 à Z4 évoquées plus haut :
- Le premier scenario (0-40ms = zone Z0) montre qu'il est possible d'équilibrer les tensions des condensateurs VC1 et VC2, car la tension VC1 est régulée par le premier DC/DC. On montre également que la répartition des courants de chacun des stacks ifc1, ifc2, ifc3 et ifc4 peuvent être régulés de manière indépendante, avec des références de courant différentes. Cela est pertinent pour limiter la sollicitation en courant de stacks défaillants, ou ayant montrés des signes de vieillissement.
- Le deuxième scenario (40ms-80ms = zone Z1) s'intéresse à démontrer que le contrôle de la tension VC1 permet également de déséquilibrer la répartition de tension entre VC1 et VC2. Cela est particulièrement intéressant pour limiter par exemple les stress en tension des composants liés aux DC/DC dont l'étage de sortie est le condensateur C2.
- Le troisième scenario (80ms-120ms = zone Z2) est le cas où les tensions sont équilibrées, et les courants déséquilibrés

- Le quatrième scenario (120ms - 160ms = zone Z3) est le cas où tensions et courants sont parfaitement équilibrés. C'est le cas où tous les stacks sont identiques, ainsi que tous les convertisseurs DC/DC.
- Enfin, le dernier scenario (160ms - 200ms = zone Z4) permet de valider un freinage récupératif, où l'on voit que la partie négative du courant de charge est absorbée par la batterie, la pile à combustible étant un organise unidirectionnel en courant.

Ces différents scenarii montrent la grande modularité de la solution proposée et valident le pilotage individuel de chacun des stacks.

Le graphe du milieu de la figure 11 représente l'ensemble des courants régulés de sortie des stacks ifc2, ifc3 et ifc4 (représentées en lignes pleines) et leurs références (représentées en lignes pointillés) des n-1 stacks déclarés CR, avec n = 4, pour un courant de charge i_{L} donné : on voit qu'on peut réguler de façon individuelle chaque stack (les courbes des courants régulés sont superposés aux courbes de référence).

Le graphe en partie inférieure de la figure 11 représente la réponse à un profil de mission de charge avec :
I_{L} , avec L pour « load » en anglais ou charge en français, l'intensité du courant de charge, par exemple d'un moteur électrique,
I « bat », l'intensité fournie ou récupérée par la batterie BAT,
I « out », l'intensité en sortie des n modules.

Ce graphe montre la répartition de courant entre la charge, la batterie et le courant en sortie du montage cascade des convertisseurs : on voit qu'on peut répondre à une charge avec un flux de puissance positif et qu'on a la possibilité de récupération de courant par freinage par la batterie.

### Exemple 2

Cet exemple représenté à la **figure 12** est une généralisation de l'exemple 1 représenté à la figure 10, selon l'approche de la **figure 9****,** avec une architecture avec n modules Mₙ et k convertisseurs DC/DC avec des modules connectés en « parallèle-cascade » selon l'invention.

## Revendications

1. Système de convertisseur électronique de puissance destiné à assurer la connexion électrique entre, d'une part, une pluralité de k sources (S) de tension électrique, k étant au moins égal à 4, et d'autre part un bus de tension continue (DC bus),
**caractérisé en ce que**
ledit système comprend k convertisseurs de tension continu/continu DC/DC,
et **en ce que**
- les k convertisseurs DC/DC sont répartis dans n modules (M₁,M₂,M₃, Mₙ), chaque module comprenant au moins p desdits k convertisseurs DC/DC, p étant au moins égal à 2
- les p convertisseurs DC/DC de chaque module (M₁,M₂,M₃, Mₙ sont munis de connectiques aptes à les connecter chacun à une des p sources (S) de tension électrique associées audit module et étant montés en parallèle dans chaque module,
- les n modules (M₁,M₂,M₃, Mₙ), sont connectés les uns aux autres par un montage en cascade,
- l'étage de sortie de chacun des (n) modules (M₁,M₂,M₃, Mₙ), est un étage capacitif (C₁,C₂,C₃, Cₙ)
- le premier et le dernier des n modules (M₁,M₂,M₃, Mₙ) montés en cascade sont munis de connectiques aptes à la connexion électrique de l'ensemble desdits modules aux bornes du bus de tension continue (DC bus).

2. Système de convertisseur électronique de puissance selon la revendication précédente, **caractérisé en ce que** la tension continue (DC Bus) est supérieure aux tensions individuelles des k sources (S).

3. Système de convertisseur électronique de puissance selon l'une des revendications précédentes, **caractérisé en ce que** l'étage capacitif (C₁,C₂,C₃, Cₙ) en sortie de chaque module (M₁,M₂,M₃, Mₙ), comporte un ou une pluralité de condensateur(s).

4. Système de convertisseur électronique de puissance selon l'une des revendications précédentes, **caractérisé en ce que**
n ≥ 2,de préférence n étant compris entre 2 et 10
p≥ 2, de préférence p étant compris entre 2 et 5.

5. Système de transfert d'énergie électrique comprenant
- une pluralité de k sources (S) de tension électrique, k étant au moins égal à 4,
- un bus de tension continue DC bus,
- et le système de convertisseur électronique de puissance destiné à assurer la connexion électrique entre ladite pluralité de k sources (S) de tension électrique et ledit bus de tension continue (DC bus) selon l'une des revendications précédentes,
**caractérisé en ce que**
dans chacun des n - 1 modules (M₁,M₂,M₃, Mₙ₋₁), un des p convertisseurs DC/DC est déclaré régulé en tension (VR) pour réguler la tension dans l'étage capacitif (C₁,C₂,C₃, Cₙ₋₁) associé à chacun desdits n - 1 modules, les autres convertisseurs DC/DC des n - 1 modules et ceux du nième module étant déclarés régulés en courant (CR) pour réguler le courant des sources (S1, S2, ..., Sk) auxquelles ils se rattachent.

6. Système de transfert d'énergie électrique comprenant
- une pluralité de k sources (S) de tension électrique, k étant au moins égal à 4,
- un bus de tension continue (DC bus),
- et le système de convertisseur électronique de puissance destiné à assurer la connexion électrique entre ladite pluralité de k sources (S) de tension électrique et ledit bus de tension continue (DC bus) selon l'une des revendications 1 à 3,
**caractérisé en ce que**
dans chacun des n modules (M₁,M₂,M₃, Mₙ), un des p convertisseurs DC/DC est déclaré régulé en tension (VR) pour réguler la tension dans l'étage capacitif (C₁,C₂,C₃,Cₙ) associé à chacun desdits n modules, les autres convertisseurs (DC/DC) des n modules étant déclarés régulés en courant (CR) pour réguler le courant des k sources (S) auxquelles ils se rattachent.

7. Système de transfert d'énergie électrique selon l'une des revendications 5 ou 6, **caractérisé en ce qu'**il comprend une source de tension différente des k sources (S) de tension électrique, sous forme d'au moins un dispositif de stockage d'énergie électrique (BAT), notamment de type électrochimique, de préférence une batterie ou un supercondensateur,
et **en ce que**
le bus de tension continue (DC bus) est également connecté à ladite source de tension sous forme d'au moins un dispositif de stockage d'énergie électrique (BAT), soit directement, soit indirectement, notamment via au moins un convertisseur de tension continu/continu DC/DC, la tension aux bornes du bus de tension continue (DC bus) étant régulée ou imposée par ledit dispositif de stockage d'énergie électrique (BAT).

8. Système de transfert d'énergie électrique comprenant
- une pluralité de k sources (S) de tension électrique, k étant au moins égal à 4,
- un bus de tension continue DC bus,
- et le système de convertisseur électronique de puissance destiné à assurer la connexion électrique entre ladite pluralité de k sources (S) de tension électrique et ledit bus de tension continue DC bus selon l'une des revendications 1 à 4,
**caractérisé en ce que** les k sources sont des piles à combustible, éventuellement regroupées en des empilements de piles à combustible, notamment des piles à hydrogène en connexion fluidique avec un ou des réservoirs d'hydrogène.

9. Ensemble comprenant un groupe motopropulseur comportant une machine électrique (MEL) et un système de convertisseur électronique de puissance selon l'une des revendications 1 à 4 ou un système de transfert d'énergie électrique selon l'une des revendications 5 à 8, ladite machine électrique étant alimentée électriquement par ledit système de convertisseur électronique ou par ledit système de transfert d'énergie électrique.

10. Véhicule comprenant l'ensemble selon la revendication précédente.

11. Ensemble comprenant une machine de charge industrielle ou un générateur électrique et un système de convertisseur électronique de puissance selon l'une des revendications 1 à 4 ou un système de transfert d'énergie électrique selon l'une des revendications 5 à 8, ladite machine ou ledit générateur étant alimentés électriquement par ledit système de convertisseur électronique ou par ledit système de transfert d'énergie électrique.
